# EUROPEAN PATENT APPLICATION

(11) **EP 4 717 504 A1**
(43) Date of publication of application: **01.04.2026**
(21) Application number: 24202978.3
(22) Date of filing: 26.09.2024
(51) Int. Cl.: B60L 3/04, B60L 3/12, B60L 53/14, B60L 53/16, B60L 53/18, B60L 53/20, B60L 53/30, B60L 53/62, B60L 53/66, B60L 3/00, B60L 58/20

(54) **ELECTRICAL SYSTEM FOR A VEHICLE AND METHOD**

(71) Applicant: Thermo King LLC, Minneapolis, MN 55420 (US)
(72) Inventor: GORSKI, Matthias, 44866 Bochum (DE); BENDRAT, Florian, 46049 Oberhausen (DE); IGLIZN, Alexander, 40699 Erkrath (DE); KMOCH, Vladimir, Praha 5, 15000 (CZ)
(74) Representative: Haseltine Lake Kempner LLP

(57) **Abstract**

The present disclosure relates to an electrical system 100 for a vehicle 10. The electrical system 100 comprises: a port 110 including a control pilot contact 8; and a controller 190 comprising a power terminal PT1 for receiving a supply voltage. The power terminal PT1 of the controller 190 is electrically coupled to the control pilot contact 8. The present disclosure also relates to a method 400 comprising causing 406 a ready signal to be transmitted to a charging station 100* from a vehicle 10, 100 via a control pilot contact 8 using electrical power drawn through the control pilot contact 8, the ready signal being for prompting the charging station 100* to supply electrical power to the vehicle 10, 100 through at least one power supply contact 6.

## Description

### FIELD OF THE INVENTION

The present invention relates to an electrical system for a vehicle, the electrical system comprising a port and a controller. The present invention also relates to a method of managing interaction between a charging station and a vehicle through a port including a control pilot contact and at least one power supply contact.

### BACKGROUND OF THE INVENTION

Communication between a charging station and an electrified vehicle (e.g., a vehicle containing a battery such as a battery-electric vehicle, a hybrid vehicle or a vehicle with an at least partially electrified transport refrigeration system) may be used to facilitate a safe charging process of the electrified vehicle. The charging station and the electrified vehicle may be each be provided with a respective controller to carry out said communication. The controller of the vehicle may transit a ready signal to the controller of the charging station to indicate that power transfer from the charging station to the vehicle is requested (e.g., because a battery of the electrified vehicle is ready to be charged).

The controller of the vehicle is supplied with electrical power for communicating with the controller of the charging station and, in particular, for transmitting the ready signal to the controller of the charging station. However, it may be that prior to transmission of the ready signal by the controller of the vehicle, the controller of the charging station prevents electrical power is prevented from being supplied to the vehicle by the charging station.

It is desirable to ensure that the controller of the vehicle is supplied with electrical power for the purposes described above despite a main battery (e.g., a high-voltage, high capacity battery such as a traction battery or a vapour-compression system battery) of the vehicle being depleted. The present invention has been devised with the foregoing in mind.

### SUMMARY OF THE INVENTION

According to a first aspect there is provided an electrical system for a vehicle, the electrical system comprising: a port including a control pilot contact; and a controller comprising a power terminal for receiving a supply voltage; wherein the power terminal of the controller is electrically coupled to the control pilot contact.

It may be that the electrical system further comprises a rectifier and the power terminal of the controller is electrically coupled to the control pilot contact via the rectifier. The rectifier may be a half-wave rectifier.

The controller may be configured to cause a ready signal to be transmitted via the control pilot contact using electrical power drawn through the control pilot contact. The controller may be configured to cause the ready signal to be transmitted in response to a determination that a voltage received from the control pilot contact is within a predetermined range.

The port may further include at least one power supply contact. It may be that the ready signal is for prompting (e.g., configured to prompt) an external controller to cause electrical power to be supplied to the vehicle through the at least one power supply contact.

The controller may be configured to cause the ready signal to be transmitted by varying an effective resistance between the control pilot contact and an earth. It may be that the electrical system further comprises a control switch coupled to the control pilot contact. The controller may be configured to cause the ready signal to be transmitted by changing a state of the control switch. It may be that the controller is configured to cause the ready signal to be transmitted by changing the state of the control switch from a non-conducting state to a conducting state.

It may be that the port further includes at least one power supply contact. The controller may be electrically couplable to the at least one power supply contact. It may be that the controller is electrically couplable to the at least one power supply contact via an AC-DC converter.

It may be that the electrical system further comprises a battery. The port may be configured to be coupled to an external cable for charging the battery. The controller may be configured to cause the battery to be coupled to the power supply contact. It may be that the battery is a first battery, the electrical system further comprises a second battery, the port is configured to be coupled to the external cable for charging each of the batteries, and an operating voltage of the second battery is greater than an operating voltage of the first battery.

It may be that the electrical system further comprises a contactor. The controller may be configured to cause the battery to be coupled to the power supply contact by closing the contactor.

According to a second aspect there is provided a vehicle comprising an electrical system in accordance with the first aspect.

According to a third aspect there is provided a method of managing interaction between a charging station and a vehicle through a port including a control pilot contact and at least one power supply contact, the method comprising: causing a ready signal to be transmitted to the charging station from the vehicle via the control pilot contact using electrical power drawn through the control pilot contact, the ready signal being for prompting the charging station to supply electrical power to the vehicle through the at least one power supply contact.

It may be that causing the ready signal to be transmitted to the charging station from the vehicle via the control pilot contact using electrical power drawn through the control pilot contact includes harvesting electrical power from pulse-width modulated signaling (e.g., a pulse-width modulated signal) supplied through the control pilot contact.

The method may comprise: monitoring a voltage between a control line coupled to the control pilot contact and an earth; and causing the ready signal to be transmitted to the charging station via the control pilot contact in response to a determination that the monitored voltage is within a predetermined range.

The method may comprise: subsequent to causing the ready signal to be transmitted to the charging station via the control pilot contact, causing a battery of the vehicle to be coupled to the charging station via the power supply contact.

### BRIEF DESCRIPTION OF THE DRAWINGS

FIG. 1 shows an example vehicle comprising a transport refrigeration system;
FIG. 2 is a diagram which shows, inter alia, an example electrical system suitable for use with the transport refrigeration system of FIG. 1;
FIG. 3 is a flowchart which shows an example method of operating the example electrical system of FIG. 2; and
FIG. 4 is a graph which shows voltage-time profiles during performance of the example method of FIG. 3.

### DETAILED DESCRIPTION OF THE INVENTION

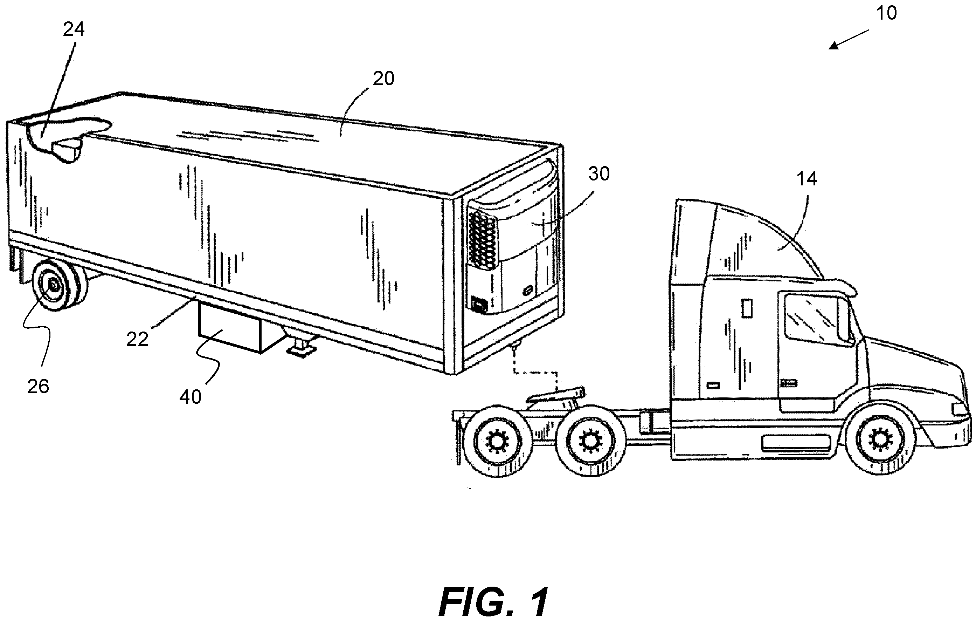

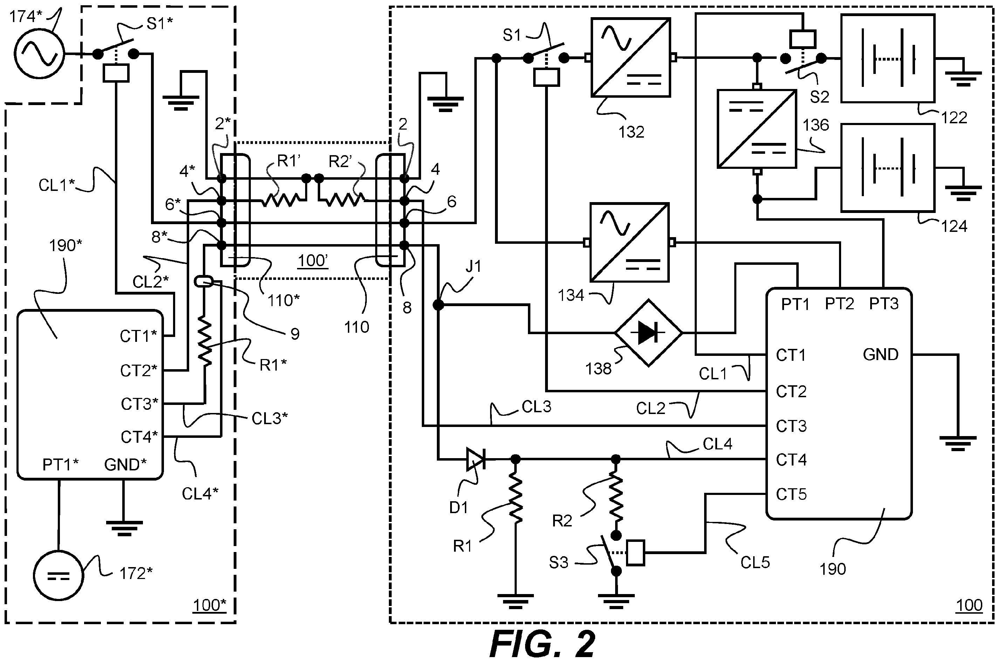

**FIG. 1** shows a vehicle 10 comprising a transport refrigeration system 20. In the example of FIG. 1, the transport refrigeration system 20 forms a part of an over-the-road refrigerated semi-trailer having a structure 22 supporting (or forming) a at least one climate-controlled compartment 24 which is configured to be cooled and/or heated by a transport refrigeration unit (TRU) 30. The structure 22 includes a chassis. The structure 22 supports the TRU 30 and an under-chassis box 40. The vehicle 10 further comprises a tractor unit 14 removably couplable to the trailer. The vehicle 10 comprises at least an axle 26, to which an electrical generator as described below with reference to FIG. 2 may be mechanically coupled. Although the axle 26 is shown as being provided as part of the over-the-road refrigerated semi-trailer in the example of FIG. 1, this need not be the case. For instance, it may be that the axle 26 is provided as part of the tractor unit 14. The TRU 30 comprises a vapour-compression system which is configured to provide cooling and/or heating to the climate-controller compartment 24, as will be appreciated by those skilled in the art.

**FIG. 2** shows a diagram of an example electrical system 100 suitable for use with (e.g., to be incorporated within) a vehicle 10 including a transport refrigeration system 20 as shown by FIG. 1. Accordingly, the electrical system 100 is generally configured for use in a vehicle and is referred to herein as a vehicle electrical system 100. More specifically, one or more components of the vehicle electrical system 100 may be disposed in the under-chassis box 40 of the TRU 30 of the vehicle 10 shown by FIG. 1.

The vehicle electrical system 100 comprises a port 110 (e.g., a vehicle port 110) configured to be coupled to an external cable 110'. FIG. 2 shows the port 110 of the vehicle electrical system 100 as being coupled to an external cable 110', which is in turn coupled to a port 110* of a charging station 100* (e.g., a charging station port 110*). When the external cable 110' is connected to the vehicle port 110 and to the charging station port 110* as shown by FIG. 2, the vehicle port 110 is electrically connected to the charging station port 110* to facilitate electrical energy transfer between the vehicle electrical system 100 and the charging station 100*. The ports 110, 110* are configured to engage complementary formation(s) on the external cable 110'. To this end, the ports 110, 110* may be male or female type ports.

Each port 110, 110* comprises at least a protective earth (PE) contact 2, 2*, a proximity pilot (PP) contact 4, 4*, a control pilot (CP) contact 6, 6*, and a line/power supply (L) contact 8, 8*. It will be appreciated that the terms protective earth (PE), proximity pilot (PP), control pilot (CP) and line (L) have recognised meanings within the art. The external cable 110' provides respective conduction pathways between each of the PE contacts, CP contacts and L contacts. In the example of FIG. 2, the external cable 110' also couples each of the PP contacts to the PE contacts through resistive elements R1', R2' disposed within the external cable 110' as outlined by "CASE B" of IEC 61851-1:2017 3.1.11. In other envisaged examples, the external cable 110' may not couple the PP contacts to the PE contacts through resistive elements. Each port 110, 110* may be designed in accordance with SAE J1772 or may be designed in accordance with IEC 62196. For example, the PP contacts 4, 4* may be as defined by SAE J1772 or IEC 62196. Each port 110, 110* may be configured to engage with Type 1 connector(s) of the external cable 110' or be configured to engage with Type 2 connector(s) of the external cable 110'. Each port 110, 110* may comprise a neutral (N) contact and/or additional line/power supply (L) contacts.

The vehicle electrical system 100 also comprises two batteries 122, 124, a primary AC-DC converter 132, a secondary AD-DC converter 134, a DC-DC converter 136, a plurality of switches S1, S2, S3, first and second resistive elements R1, R2 (e.g., first and second vehicle resistive elements R1, R2), a diode D1, a rectifier 138 and a controller 190 (which may be referred to as a vehicle controller 190). Each battery 122, 124 is couplable to the L contact 6 of the port 110 of the vehicle for receiving electrical power from the charging station 100* when the external cable 110' is coupled between the respective ports 110, 110*.

The two batteries 122, 124 have different operating voltages. Specifically, an operating voltage of one of the batteries (i.e., the higher-voltage battery 122) is greater than an operating voltage of a second of the batteries (i.e., the lower-voltage battery 124). For example, the operating voltage of the higher-voltage battery may be between 400 and 800 VDC inclusive and the operating voltage of the lower-voltage battery may be between 12 and 48 VDC. The higher-voltage battery 122 and/or the lower-voltage battery 124 may be configured to provide electrical energy to one or more loads of the TRU 30, such as motor(s) configured to drive a compressor and/or a fan of the TRU 30 (not shown by FIG. 1).

The higher-voltage battery 122 is electrically couplable to the vehicle L contact 6 via a first of the plurality of switches (i.e., a mains switch S1), the primary AC-DC converter 132 and a second of the plurality of switches (i.e., a battery switch S2). The lower-voltage battery 124 is electrically couplable to the vehicle L contact 6 via the mains switch S1, the primary AC-DC converter 132, and the DC-DC converter 136. In this example, the mains switch S1 and the battery switch S2 are both mechanical contactors. During use, the primary AC-DC converter 132 converts AC electrical power received from (and through) the vehicle L contact 6 into DC electrical power at the operating voltage of the higher-voltage battery 122. The DC-DC converter 136 converts (e.g., bucks) at least part of the DC electrical power provided by the primary AC-DC converter from the operating voltage of the higher-voltage battery 122 to the operating voltage of the lower-voltage battery 124. An input DC side of the DC-DC converter 136 is coupled between an output DC side of the primary AC-DC converter 132 and the battery switch S2 such that the DC-DC converter 136 may receive electrical power from the vehicle L contact 6 regardless of the state of the battery switch S2.

In the example of FIG. 2, the vehicle controller 190 comprises a plurality of power terminals PT1, PT2, PT3. Each vehicle controller power terminal PT1, PT2, PT3 is configured to receive a supply voltage for powering the vehicle controller 190 as is described in further detail below. The vehicle controller 190 further comprises a ground terminal GND which is coupled to a ground or an earth point of the vehicle/electrical system 100. In other envisaged examples, the vehicle controller 190 may be an auxiliary vehicle controller 190 having only a single power terminal (that is, the first vehicle controller power terminal PT1 as described herein) and the vehicle 100 may further comprise a main vehicle controller having one or more additional power terminals (that is, the second and third vehicle controller power terminals PT2, PT3 as described herein).

The vehicle controller 190 also comprises a first vehicle communication terminal CT1, a second vehicle communication terminal CT2, a third vehicle communication terminal CT3, a fourth vehicle communication terminal CT4 and a fifth vehicle communication terminal CT5. Each vehicle communication terminal CT1-CT5 functions as a physical interface between a processor of the vehicle controller 190 and a respective vehicle communication line CL1-CL5. The function of the vehicle controller 190 is described in further detail below.

A first vehicle communication line CL1 extends from the first vehicle communication terminal CT1 to the mains switch S1. The vehicle controller 190 is configured to control operation of the mains switch S1 by providing appropriate signalling on the first vehicle communication line CL1. In a similar way, a second vehicle communication line CL2 extends from the second vehicle communication terminal CT2 to the battery switch S2 and the vehicle controller 190 is configured to control operation of the battery switch S2 by providing appropriate signalling on the second vehicle communication line CL2.

A third vehicle communication line CL3 extends from the third vehicle communication terminal CT3 to the vehicle PP contact 4. As a result, the third vehicle communication line CL3 may be referred to as a vehicle PP line CL3. The vehicle controller 190 is configured to monitor the vehicle PP line CL3 (e.g., monitor an overall effective resistance of the vehicle PP line CL3) to detect when the external cable has been physically mated to the port 110 and to prevent the vehicle 10 from driving off while the external cable is physically mated to the port 110. Those skilled in the art will appreciate that the vehicle controller 190 may be configured to monitor the vehicle PP line CL3 for additional purposes as appropriate.

A fourth vehicle communication line CL4 extends from the fourth vehicle communication terminal CT4 to the vehicle CP contact 8. Accordingly, the fourth vehicle communication line CL4 may be referred to as a vehicle CP line CL4. The diode D1 is disposed in the vehicle CP line CL4 such that the diode D1 is coupled in series between the vehicle CP contact 8 and the fourth vehicle communication terminal CT4. An anode of the diode D1 is coupled to the vehicle CP contact 8 whereas a cathode of the diode D1 is coupled to the fourth vehicle communication terminal CT4. The resistive elements R1, R2 are each coupled or couplable in parallel between the vehicle CP contact 8 and the fourth vehicle communication terminal CT4 (by being coupled or couplable in series to a ground or an earth point of the vehicle/electrical system 100). A third of the switches (i.e., a control switch S3) is coupled in series between a second of the resistive elements (i.e., the second vehicle resistive element R2) and a ground or an earth point of the vehicle/electrical system 100.

A fifth vehicle communication line CL5 extends from the fifth vehicle communication terminal CT5 to the control switch S3. The vehicle controller 190 is configured to control operation of the control switch S3 by providing appropriate signalling on the fifth vehicle communication line CL5.

The first vehicle controller power terminal PT1 is electrically coupled to the vehicle CP contact 8. In the example of FIG. 2, the first vehicle controller power terminal PT1 is electrically coupled to the vehicle CP contact 8 at a junction J1 on the vehicle CP line CL4 between the vehicle CP contact 8 and the diode D1. However, this disclosure envisages that the first vehicle controller power terminal PT1 could be electrically coupled to the vehicle CP contact 8 at a junction disposed at another suitable location, such as between the diode D1 and the fourth vehicle communication terminal CT4 or between the first vehicle resistive element R1 and a ground or an earth point of the vehicle/electrical system 100.

In this example, the first vehicle controller power terminal PT1 is electrically coupled to the junction J1 (and, by extension, the vehicle CP contact 8) via the rectifier 138, which is a half-wave rectifier 138. In examples in which the first vehicle controller power terminal PT1 is electrically coupled to the vehicle CP contact 8 on the cathode side of the diode D1, the diode D1 may be considered to act as a half-wave rectifier when used in conjunction with a capacitive element and thus an additional dedicated half-wave rectifier need not necessarily be provided.

The vehicle controller 190 is electrically couplable to the vehicle L contact 6 through each of the second and third vehicle controller power terminals PT2, PT3.

More specifically, the second vehicle controller power terminal PT2 is electrically coupled to the secondary AC-DC converter 134 (i.e., to the DC output side of the secondary AC-DC converter 134). In turn, the secondary AC-DC converter 134 is coupled to the vehicle L contact 6. The coupling of the secondary AC-DC converter 134 to the vehicle L contact 6 bypasses both of the switches S1, S2, such that the secondary AC-DC converter 134 may receive electrical power from the vehicle L contact 6 regardless of the state of the switches S1, S2. In use, the secondary AC-DC converter 134 converts AC electrical power received through the vehicle L contact 6 into DC electrical power for supply to the second vehicle controller power terminal PT2.

Further, the third vehicle controller power terminal PT3 is electrically coupled to the DC-DC converter 136 (i.e., to the DC output side of the DC-DC converter 136 which is coupled to the lower-voltage battery 124). The third vehicle controller power terminal PT3 can receive power from the DC-DC converter 136 and the vehicle L contact 6 when the mains switch S1 is closed (i.e., in a conducting state).

The charging station 100* further comprises a switch S1*, a resistive element R1* (which may be referred to as the charging station resistive element R1*), a DC power supply 172* and a controller 190* (which may be referred to as a charging station controller 190*). The charging station 100* may also be referred to as a charge point, chargepoint, or electric vehicle supply equipment (EVSE). The switch S1* is electrically coupled between an external AC power supply 174* and the charging station L contact 6*. The external AC power supply 174* may be a local grid network. The switch S1* is normally open (i.e., in a substantially non-conducting state).

The charging station controller 190* comprises a power terminal PT1*. The charging station power terminal PT1* is electrically coupled to the DC power supply 172* such that the charging station power terminal PT1* is configured to receive a supply voltage from the DC power supply 172* for powering the charging station controller 190*. The charging station controller 190* further comprises a ground terminal GND* which is coupled to a ground, an earth point of the charging station 100*.

The charging station controller 190* also comprises a first charging station communication terminal CT1*, a second charging station communication terminal CT2*, a third charging station communication terminal CT3* and a fourth charging station communication terminal CT4*. Each charging station communication terminal CT1*-CT4* functions as a physical interface between a processor of the charging station controller 190* and a respective charging station communication line CL1*-CL4*.

A first charging station communication line CL1* extends from the first charging station communication terminal CT1* to the supply switch S1*. The charging station controller 190 is configured to control operation of the supply switch S1* by providing appropriate signalling on the first charging station communication line CL1*.

A second charging station communication line CL2* extends from the second charging station communication terminal CT2* to the charging station PP contact 4*. As a result, the second charging station communication line CL2* may be referred to as a charging station PP line CL2*. Those skilled in the art will appreciate that the charging station controller 190* may be configured to monitor the charging station PP line CL2* for additional purposes defined according to SAE J1772 or IEC 62196 as appropriate.

A third charging station communication line CL3* extends from the third charging station communication terminal CT3* to the charging station CP contact 8*. Accordingly, the third charging station communication line CL3* may be referred to as a charging station CP line CL3*. The charging station resistive element R1* is disposed on the charging station CP line CL3* such that the charging station resistive element R1* is coupled in series between the charging station CP contact 8* and the third charging station communication terminal CT3*.

The charging station controller 190* is configured to apply a pulse-width modulated (PWM) signal to the charging station CP line CL3* at its third charging station communication terminal CT3*. For this purpose, the charging station controller 190* comprises a PWM generator coupled to the third charging station communication terminal CT3*. In this example, the PWM generator is configured to generate a substantially square-wave alternating current ranging from +12 V to - 12 V at a fundamental frequency of approximately 1 kHz and to apply this substantially square-wave alternating current to the third charging station communication terminal CT3*. The charging station controller 190* is also configured to apply a substantially fixed (e.g., steady) voltage (e.g., non-pulsating direct current voltage) to the charging station CP line CL3* at its third charging station communication terminal CT3*.

A fourth charging station communication line CL4* extends from the fourth charging station communication terminal CT4* to a voltage transducer 9 disposed on the charging station CP line CL3* at the charging station CP contact 8*. The charging station controller 190* is configured to monitor the voltage at the charging station CP contact 8* using signalling received from the voltage transducer 9 along the fourth charging station communication line CL4*.

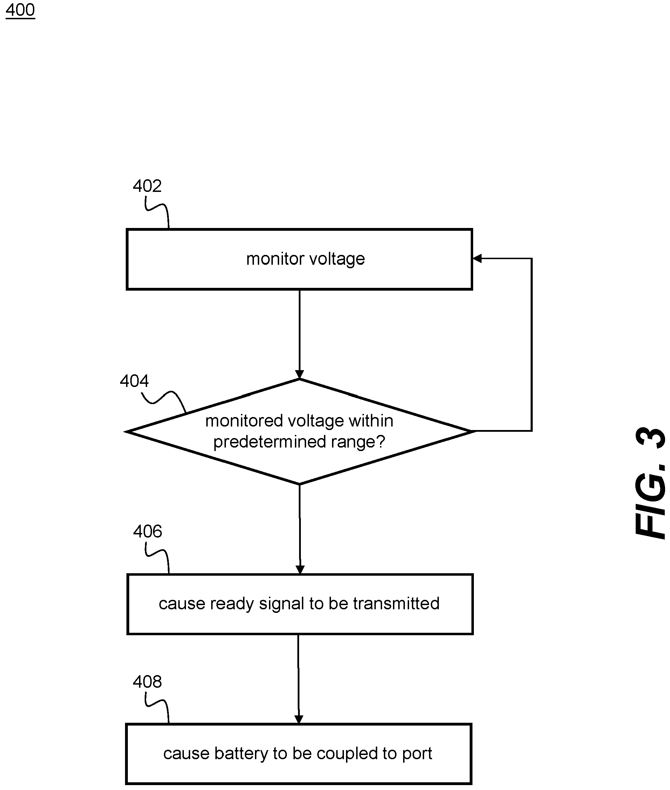

**FIG. 3** is a flowchart which shows an example method 400 of managing interaction between a vehicle in which the vehicle electrical system 100 is disposed (e.g., the vehicle 10 of FIG. 1) and the charging station 100*. The method 400 is carried out by the vehicle controller 190 (i.e., the vehicle controller 190 is configured to carry out the method 400).

The method 400 includes, at block 402, monitoring a voltage on the fourth vehicle communication line CL4 at the fourth vehicle communication terminal CT4. The method 400 also includes, at block 404, determining whether the monitored voltage on the communication line CL4 is within a predetermined range. If it is determined, at block 404, that the monitored voltage is not within the predetermined range, the method 400 returns to monitoring the voltage on the fourth vehicle communication line CL4 at block 402 and continuing thereafter.

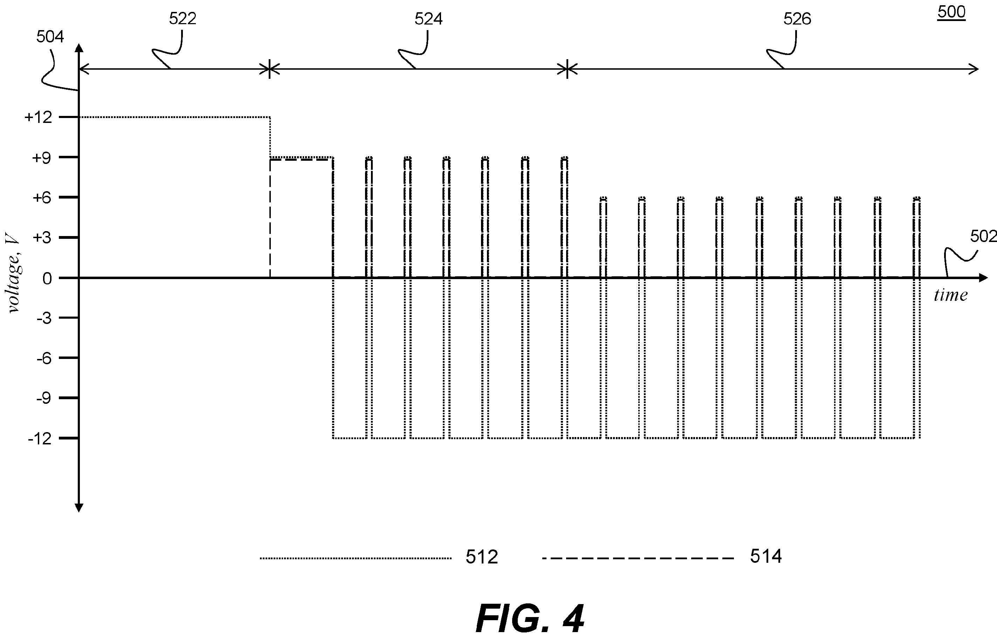

On the other hand, if it is determined, at block 404, that the monitored voltage is within the predetermined range, the method 400 proceeds to causing, at block 406, a ready signal to be transmitted to the charging station controller 190* via the fourth vehicle communication line CL4. The ready signal is caused to be transmitted to the charging station controller 190* via the fourth vehicle communication line CL4 by the vehicle controller 190* causing the control switch S3 to be closed (i.e., moved into a conducting state from a substantially non-conducting state) by providing appropriate signalling on the first charging station communication line CL1*. In general terms, the ready signal is for prompting (e.g., is configured to prompt) the charging station controller 190* to supply electrical power to the vehicle 100 through the L contacts 6, 6*. Specifically, prior to receipt of the ready signal, the switch S1* is open (i.e., is in a non-conducting state) and thus electrical power cannot flow from the external AC power supply 174* to the vehicle 100 through the L contacts 6, 6*. Upon receipt of the ready signal, the charging station controller 190* causes the switch S1* to be closed and hence the external AC power supply 174* is coupled to the vehicle 100 through the L contacts 6, 6*. The ready signal is discussed in more detail below with reference to FIG. 4. At this point, the vehicle controller 190 may now receive electrical power through its second vehicle power terminal PT2 from the external AC power supply 174* via the L contacts 6, 6* and the secondary AC-DC converter 134.

Subsequent to causing the ready signal to be transmitted to the charging station controller 190* at block 406, the method 400 includes causing one or more of the batteries 122, 124 to be coupled to the vehicle L contact 6. To this end, the vehicle controller 190 may cause the mains switch S1 and/or the battery switch S2 to be closed (i.e., moved into a conducting state from a substantially non-conducting state) and thus cause the higher-voltage battery 122 and the lower-voltage battery 124 to be coupled to the L contacts 6, 6* via the primary AC-DC converter 132 (and the DC-DC converter 136, as applicable) for charging thereof. Moreover, at this point, the vehicle controller 190 may now receive electrical power through its third vehicle power terminal PT3 from the external AC power supply 174* via the L contacts 6, 6*, the primary AC-DC converter 132 and the DC-DC converter 136. The vehicle controller 190 may now use power drawn from the external AC power supply 174* via the L contacts 6, 6* for performing other control functions and regulations while the batteries 122, 124 are being charged.

**FIG. 4** is a graph 500 which shows voltage-time profiles as observed at the charging station CP contact 8* (i.e., at the charging station 100* as monitored by the voltage transducer 9) and the fourth vehicle communication terminal CT4 (i.e., at the vehicle 100/the vehicle controller 190), respectively, while the electrical system 100 is in use and during performance of the method 400. The graph defines an x-axis 502 corresponding to time and a y-axis 504 corresponding to voltage. A profile of the voltage *V*_{*CP*8*} at the charging station CP contact 8* is represented by fine-dashed line 512 whereas a profile of the voltage *V*_{*CL*4} at the fourth vehicle communication terminal CT4 is represented by coarse-dashed line 514. It will be appreciated that the profiles shown by FIG. 4 are idealised and intended for explanatory purposes rather than being representative of real-world conditions or data.

During phase A (represented by reference sign 522), the charging station controller 190* applies/is applying a substantially fixed (e.g., steady) voltage of approximately + 12 V to the third charging station communication terminal CT3*. However, the external cable 110' is not coupled between the ports 110*, 110 and so despite the application of a voltage *V_{g}* to the third charging station communication terminal CT3* by the charging station controller 190*, substantially no voltage is observed by the vehicle controller 190 at the fourth vehicle communication terminal CT4.

During phase B (represented by reference sign 524), the external cable 110' is coupled between the ports 110*, 110 and so a conduction path is provided between the third charging station communication terminal CT3* and the fourth vehicle communication terminal CT4 via the third charging station communication line CL3* and the fourth vehicle communication line CL4 through the charging station CP contact 8* and the vehicle CP contact 8.

In the example of FIG. 2, a voltage drop *V*_{*D*1} across the diode D1 is about 0.7 V, the resistance *R*_{*R*1*} of the charging station resistive element R1* is approximately 1000 Ohms, the resistance *R*_{*R*1} of the first vehicle resistive element R1 is approximately 2740 Ohms and the resistance *R*_{*R*2} of the second vehicle resistive element R2 is approximately 1300 Ohms. Without wishing to be bound by theory, the current *I*_{*CP*8*} supplied through the charging station CP contact 8* is therefore given by application of Ohm's law as *I*_{*CP*8*} *=* (*V_{g}* - *V*_{*D*1})/(*R*_{*R*1*} + *R*_{*R*1}) = (12 - 0.7)/(1000 + 2740) = ~ 3 mA. The voltage *V*_{*CP*8*} at the charging station CP contact 8* is then given as *V*_{*CP*8}*_{*} = V_{g}* - (*R*_{*R*1*} × *I*_{*CP*8*}) = 12 - (1000 × 0.003) = ~ 9 V. The voltage *V*_{*CL*4} at the fourth vehicle communication terminal is then given as *V*_{*CL*4} *= V*_{*CP*8*} - *V*_{*D*1} *=* 9 - 0.7 = ~ 8.3 V. The predetermined range discussed above with reference to block 402 in FIG. 3 may correspond to a tolerance range around the expected voltage at the fourth vehicle communication terminal when the external cable 110' is coupled between the ports 110*, 110 (in this example, 8.3 V).

During phase B, the charging station controller 190* moves from applying a substantially fixed (e.g., steady) voltage (e.g., direct current voltage) of + 12 V to the charging station CP line CL3* at its third charging station communication terminal CT3* to applying a substantially square-wave alternating current ranging from +12 V to - 12 V at a fundamental frequency of approximately 1 kHz using the PWM generator described above. The duty cycle of the applied substantially square-wave alternating current (e.g., the PWM signal) may be indicative of a maximum permitted root mean square (RMS) current which may be drawn through the vehicle L contact 6 and the external cable 110'. The vehicle controller 190 may store a value corresponding to the maximum permitted root mean square (RMS) current within a memory thereof and use this value for control of the electrical system 100 and/or transmit this value to other controllers within the vehicle 10.

When the applied alternating current voltage *V_{g}* is positive, the voltage *V*_{*CP*8*} at the charging station CP contact 8* is approximately 9 V and the voltage *V*_{*CL*4} at the fourth vehicle communication terminal CT4 is approximately 8.3 V at these times as above. However, when the applied alternating current is negative, the diode D1 acts as an ideal switch to prevent the flow of electric current from the vehicle 100 to the charging station 100* via the CP contacts 8, 8*. Therefore, the voltage *V*_{*CP*8*} at the charging station CP contact 8* is approximately - 12 V and the voltage *V*_{*CL*4} at the fourth vehicle communication terminal CT4 is approximately 0 V at these times.

Also during phase B, the switch S1* is open and so the vehicle controller 190 cannot receive electrical power from the external AC power supply 174* via the vehicle L contact 6 for powering its operation either at the second vehicle controller power terminal PT2. If the higher-voltage battery 122 or the lower-voltage battery 124 are fully depleted (i.e., in deep discharge), then the vehicle controller 190 cannot receive electrical power from either of these batteries 122, 124 for powering its operation at the third vehicle controller power terminal PT3. However, the vehicle controller 190 receives electrical power for its operation (e.g., to cause the ready signal to be transmitted to the charging station controller 190*) from the first vehicle controller power terminal PT1 via the vehicle CP contact 8. Accordingly, systems and methods in accordance with the present disclosure enable the electrical system 100 to prompt the charging station 100* to begin electrical power transfer via the external cable 100' even when both of the batteries 122, 124 are fully depleted.

The coupling of the first vehicle power terminal PT1 to the vehicle CP contact 8 via a rectifier 138 ensures that the vehicle power controller 190 may receive a relatively smooth DC supply voltage despite the PWM signalling outputted by the charging station controller 190* to the vehicle power controller 190 via the CP contacts 8, 8*. The coupling of the first vehicle power terminal PT1 to the vehicle CP contact 8 via a half-wave rectifier 138 (as opposed to a full-wave rectifier) ensures that electrical power is only drawn therethrough while the alternating current voltage *V_{g}* applied by the PWM generator is positive. This prevents the voltage at the charging station CP contact 8*, as detected by the voltage transducer 9, from significantly deviating from - 12 V when the alternating current voltage *V_{g}* applied by the PWM generator is negative. In turn, this reduces a risk of the charging station controller 190* being triggered to determine that there is an abnormality and thus open the switch S1* and thereby terminate electrical power transfer to the electrical system 100.

During phase C (represented by reference sign 526), the charging station controller 190* continues to apply the substantially square-wave alternating current ranging from +12 V to - 12 V at its third charging station communication terminal CT3* but the control switch S3 is closed. The transition between phases B and C shown by FIG. 4 corresponds to the action represented by block 406 in FIG. 3 (i.e., the vehicle controller 190* causing the control switch S3 to be closed by providing appropriate signalling along the fifth vehicle communication line CL5). The vehicle controller 190 uses electrical power drawn from the charging station controller 190* through the vehicle CP contact 8 (e.g., alone, or in addition to electrical power drawn from one or more of the batteries 124, 122) to cause the control switch S3 to be closed. Specifically, the vehicle controller 190 draws electrical power from the charging station controller 190* through the vehicle CP contact 8 by harvesting electrical power from the PWM signalling (e.g., the PWM signal) outputted by the charging station controller 190* to the vehicle power controller 190 via the CP contacts 8, 8*. In some examples, the vehicle controller 190 may check that the charging station controller 190* has commenced PWM signalling on the charging station CP line CL3* before causing the control switch S3 to be closed using electrical power drawn through the vehicle CP contact 8. In such examples, if the vehicle controller 190 determines that the charging station controller 190* has not commenced PWM signalling on the charging station CP line CL3*, the vehicle controller 190 may avoid causing the control switch S3 to be closed.

The action of closing the control switch S3 has the consequence of reducing an effective overall resistance between the diode D1 and a ground or an earth point of the vehicle/electrical system 100 (and between the vehicle CP contact 8 and the ground or the earth point of the vehicle/electrical system 100) by additionally coupling the second resistive element in parallel between the vehicle CP contact 8 and the ground or the earth point of the vehicle/electrical system 100. Because in the example of FIG. 2 the resistance *R*_{*R*1} of the first vehicle resistive element R1 is approximately 2740 Ohms and the resistance *R*_{*R*2} of the second vehicle resistive element R2 is approximately 1300 Ohms and these resistive elements are coupled in parallel when the control switch S3 is closed, the action of closing switch S3 has the consequence of reducing the effective overall resistance between the vehicle CP contact 8 and the ground or the earth point of the vehicle/electrical system 100from approximately 2740 Ohms (equal to the value of *R*_{*R*1}) to approximately 882 Ohms (equal to the value of the reciprocal of the sum of 1/*R*_{*R*1} and 1/*R*_{*R*2}). At this point, the current *I*_{*CP*8*} supplied through the charging station CP contact 8* is therefore given by application of Ohm's law as *I*_{*CP*8*} = (*V_{g}* - *V*_{*D*1})/(*R*_{*R*1*} + [1/*R*_{*R*1} + 1/*R*_{*R*2}]⁻¹) = (12 - 0.7)/(1000 + 882) = ~ 6 mA. The voltage *V*_{*CP*8*} at the charging station CP contact 8* is then given as *V*_{*CP*8*} *= V_{g}* - (*R*_{*R*1*} × *I*_{*CP*8*}) = 12 - (1000 × 0.006) = ~ 6 V. The voltage *V*_{*CL*4} at the fourth vehicle communication terminal is then given as *V*_{*CL*4} *= V*_{*CP*8*} - *V*_{*D*1} = 6 - 0.7 = ~ 5.3 V.

The detection of the change in voltage at the charging station CP contact 8* to approximately 6 V corresponds to the charging station controller 190* detecting the transmission of the ready signal by the vehicle controller 190. That is to say that the ready signal corresponds to the voltage at the charging station CP contact 8* being a particular maximum positive voltage (in this example, 6 V). The amount of electrical power drawn by the vehicle controller 190 from the vehicle CP contact 8 at the first vehicle power terminal may preferably be no more than (e.g., limited to) 1% of the minimum expected current supplied through the charging station CP contact 8* during phase B or phase C. This may prevent the charging station controller 190* from being triggered to determine that there is an abnormality and thus open the switch S1* and thereby terminate electrical power transfer to the electrical system 100. In the example above, 1% of the minimum expected current supplied through the charging station CP contact 8* corresponds to 1% of 3 mA, which is 30 µA. For similar reasons, the amount of electrical power drawn by the vehicle controller 190 from the vehicle CP contact 8 at the first vehicle power terminal may yet more preferably be no more than (e.g., limited to) 0.5% of the minimum expected current supplied through the charging station CP contact 8* during phase B or phase C. In this further example, 0.5% of the minimum expected current supplied through the charging station CP contact 8* corresponds to 0.5% of 3 mA, which is 15 µA.

Although the controller(s) 190, 190* are shown and described as having a particular number of terminals (i.e., power and communication terminals) herein, it will be appreciated that either controller may have any suitable number of terminals. For example, the vehicle controller 190* may have more than five communication terminals and/or more than three power terminals.

The controller(s) described herein may comprise a processor. The controller and/or the processor may comprise any suitable circuity to cause performance of the methods described herein and as illustrated in the drawings. The controller or processor may comprise: one or more discrete electronic components arranged in an analog, digital or mixed-signal (i.e. analog and digital) circuit; and/or at least one application specific integrated circuit (ASIC); and/or at least one field programmable gate array (FPGA); and/or single or multi-processor architectures; and/or sequential (Von Neumann)/parallel architectures; and/or at least one programmable logic controllers (PLCs); and/or at least one microprocessor; and/or at least one microcontroller; and/or a central processing unit (CPU), to perform the methods and or stated functions for which the controller or processor is configured.

The controller or the processor may comprise or be in communication with one or more memories that store that data described herein, and/or that store machine readable instructions (e.g., software) for performing the processes and functions described herein (e.g., determinations of parameters and execution of control routines). The memory may be any suitable non-transitory computer readable storage medium, data storage device or devices, and may comprise a hard disk and/or solid state memory (such as flash memory). In some examples, the computer readable instructions may be transferred to the memory via a wireless signal or via a wired signal. The memory may be permanent non-removable memory or may be removable memory (such as a universal serial bus (USB) flash drive). The memory may store a computer program comprising computer readable instructions that, when read by a processor or controller, causes performance of the methods described herein, and/or as illustrated in the Figures. The computer program may be software or firmware or be a combination of software and firmware.

Except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

## Claims

1. An electrical system for a vehicle, the electrical system comprising:
a port including a control pilot contact; and
a controller comprising a power terminal for receiving a supply voltage;
wherein the power terminal of the controller is electrically coupled to the control pilot contact.

2. The electrical system of claim 1, further comprising a rectifier, and wherein the power terminal of the controller is electrically coupled to the control pilot contact via the rectifier.

3. The electrical system of claim 2, wherein the rectifier is a half-wave rectifier.

4. The electrical system of any preceding claim, wherein the controller is configured to cause a ready signal to be transmitted via the control pilot contact using electrical power drawn through the control pilot contact.

5. The electrical system of claim 4, wherein the controller is configured to cause the ready signal to be transmitted in response to a determination that a voltage received from the control pilot contact is within a predetermined range.

6. The electrical system of claim 4 or claim 5, wherein the controller is configured to cause the ready signal to be transmitted by varying an effective resistance between the control pilot contact and an earth.

7. The electrical system of any of claims 4 to 6, further comprising a control switch coupled to the control pilot contact, and wherein the controller is configured to cause the ready signal to be transmitted by changing a state of the control switch.

8. The electrical system of any preceding claim, wherein the port further includes at least one power supply contact, and wherein the controller is electrically couplable to the at least one power supply contact.

9. The electrical system of claim 8, further comprising a battery, and wherein the controller is configured to cause the battery to be coupled to the power supply contact.

10. The electrical system of claim 9, further comprising a contactor, and wherein the controller is configured to cause the battery to be coupled to the power supply contact by closing the contactor.

12. A vehicle comprising the electrical system of any preceding claim.

13. A method of managing interaction between a charging station and a vehicle through a port including a control pilot contact and at least one power supply contact, the method comprising:
causing a ready signal to be transmitted to the charging station from the vehicle via the control pilot contact using electrical power drawn through the control pilot contact, the ready signal being for prompting the charging station to supply electrical power to the vehicle through the at least one power supply contact.

14. The method of claim 13, comprising:
monitoring a voltage between a control line coupled to the control pilot contact and an earth; and
causing the ready signal to be transmitted to the charging station via the control pilot contact in response to a determination that the monitored voltage is within a predetermined range.

15. The method of claim 14, comprising:
subsequent to causing the ready signal to be transmitted to the charging station via the control pilot contact, causing a battery of the vehicle to be coupled to the charging station via the power supply contact.

## Amended claims

### Amended claims in accordance with Rule 137(2) EPC.

1. An electrical system (100) for a vehicle (10), the electrical system comprising:
a port (110) including a control pilot contact (8); and
a controller (190) comprising a power terminal (PT1) for receiving a supply voltage;
**characterized in that**:
the power terminal of the controller is electrically coupled to the control pilot contact; and
the controller is configured to cause (406) a ready signal to be transmitted via the control pilot contact using electrical power drawn through the control pilot contact.

2. The electrical system (100) of claim 1, further comprising a rectifier (138), and wherein the power terminal (PT1) of the controller (190) is electrically coupled to the control pilot contact (8) via the rectifier.

3. The electrical system (100) of claim 2, wherein the rectifier (138) is a half-wave rectifier.

4. The electrical system (100) of any preceding claim, wherein the controller (190) is configured to cause (406) the ready signal to be transmitted in response to a determination (402, 404) that a voltage received from the control pilot contact (8) is within a predetermined range.

5. The electrical system (100) of any preceding claim, wherein the controller (190) is configured to cause (406) the ready signal to be transmitted by varying an effective resistance (R1, R2) between the control pilot contact (8) and an earth.

6. The electrical system (100) any preceding claim, further comprising a control switch (S3) coupled to the control pilot contact (8), and wherein the controller (190) is configured to cause (406) the ready signal to be transmitted by changing a state of the control switch.

7. The electrical system (100) of any preceding claim, wherein the port (110) further includes at least one power supply contact (6), and wherein the controller (190) is electrically couplable to the at least one power supply contact.

8. The electrical system (100) of claim 7, wherein the ready signal is for prompting an external controller (190*) to cause electrical power to be supplied to the vehicle (10) through the at least one power supply contact (6).

9. The electrical system (100) of claim 7 or claim 8, further comprising a battery (122, 124), and wherein the controller (190) is configured to cause the battery to be coupled to the power supply contact (6).

10. The electrical system (100) of claim 9, further comprising a contactor (S1, S2), and wherein the controller (190) is configured to cause the battery (122, 124) to be coupled to the power supply contact (6) by closing the contactor.

11. A vehicle (10) comprising the electrical system (100) of any preceding claim.

12. A method (400) of managing interaction between a charging station (100*) and a vehicle (10) through a port (110) including a control pilot contact (8) and at least one power supply contact (6), the method **characterized by** comprising:
causing (406) a ready signal to be transmitted to the charging station from the vehicle via the control pilot contact using electrical power drawn through the control pilot contact, the ready signal being for prompting the charging station to supply electrical power to the vehicle through the at least one power supply contact.

13. The method (400) of claim 12, comprising:
monitoring (402) a voltage between a control line (CL4) coupled to the control pilot contact (8) and an earth; and
causing (406) the ready signal to be transmitted to the charging station (100*) via the control pilot contact in response to a determination (404) that the monitored voltage is within a predetermined range.

14. The method (400) of claim 13, comprising:
subsequent to causing (406) the ready signal to be transmitted to the charging station (100*) via the control pilot contact (8), causing (408) a battery of the vehicle (10) to be coupled to the charging station via the power supply contact (6).

15. The method (400) of any of claims 12 to 14, wherein:
causing (406) the ready signal to be transmitted to the charging station (100*) from the vehicle (10) via the control pilot contact (8) using electrical power drawn through the control pilot contact includes harvesting electrical power from pulse-width modulated signaling supplied through the control pilot contact.
